# EUROPÄISCHE PATENTSCHRIFT

(11) **EP 1 297 879 B1**
(45) Veröffentlichungstag und Bekanntmachung des Hinweises auf die Patenterteilung: **05.09.2007**
(21) Anmeldenummer: 02019515.2
(22) Anmeldetag: 31.08.2002
(51) Int. Cl.: B01D 45/14, F01M 13/04

(54) **Ölseparator**
Oil separator
Séparateur d'huile

(30) Priorität: 28.09.2001 DE 10148000
(43) Veröffentlichungstag der Anmeldung: 02.04.2003
(73) Patentinhaber: Rolls-Royce Deutschland Ltd & Co KG, 15827 Dahlewitz (DE)
(72) Erfinder: Kwan, William Ching-To, 12307 Berlin (DE)
(74) Vertreter: Weber, Joachim

(56) Entgegenhaltungen:
- EP-A- 0 718 023
- EP-A- 0 987 053
- DD-A- 91 226
- DE-U- 8 106 082
- SOVIET INVENTIONS ILLUSTRATED Week 8610, 22. März 1986 (1986-03-22) Derwent Publications Ltd., London, GB; AN 86-067706 XP002230072 & SU 1 174 062 A (NATURAL GAS PROCESS), 23. August 1985 (1985-08-23)
- SOVIET INVENTIONS ILLUSTRATED Week 8837, 26. Oktober 1988 (1988-10-26) Derwent Publications Ltd., London, GB; AN 88-26327 XP002230073 & SU 1 378 894 A (ZHUVAKOV), 7. März 1988 (1988-03-07)

## Beschreibung

Die Erfindung bezieht sich auf einen Ölseparator mit einem Gehäuse und einem in diesem drehbar angeordneten Rotor, welcher eine Durchströmungskammer aufweist, welche von mit Öl belasteter Luft durchströmbar ist, wobei in der Durchströmungskammer poröses Material angeordnet ist.

Die Erfindung bezieht sich insbesondere auf einen Ölseparator zur Verwendung in einer Fluggasturbine.

Aus dem Stand der Technik ist es bekannt, die durch Fluggasturbinen geleitete Luft durch einen Ölseparator umzuleiten, um feinste Öltröpfchen, die von der Luft mitgetragen werden, zu separieren.

Der Stand der Technik zeigt unterschiedlichste Ausgestaltungen derartiger Ölseparatoren. Diese können beispielsweise in Entlüftungsdeckeln als stationäre Elemente aufgenommen sein, um durchströmende Luft von den mitgenommenen Ölpartikeln zu trennen.

Auf dem Gebiet der Fluggasturbinen sind Separatoren der eingangs beschriebenen Art mit einem Rotor bekannt. Das in der Durchströmungskammer oder in den Flügel des Rotors aufgenommene poröse Material ist dabei in Form eines metallischen, schwammartigen Elementes ausgebildet. Dieses ist beispielsweise unter der Marke Retimet auf dem Markt. Derartige Metallschwämme werden durch Aufdampfen oder Abscheiden von metallischen Werkstoffen, beispielsweise Nickel- oder Chrom-Nickel-Legierungen auf Kunststoff-Trägerkörper hergestellt. Die schwammartigen Kunststoff-Trägerkörper werden nachfolgend entfernt, sodass ein poröses, gitterartiges Element resultiert. Dieses ist mechanisch bearbeitbar, es kann in unterschiedlichste Formen gebracht werden und zeichnet sich durch gute mechanische Festigkeitswerte aus.

Bei Zentrifugal-Ölseparatoren der erfindungsgemäßen Art durchströmt die ölbelastete Luft die sich drehende Durchströmungskammer und wird hierbei Zentrifugalkräften bzw. Zentripetalkräften ausgesetzt. Durch Masseunterschiede wirken unterschiedlich große Kräfte auf die Luftpartikel sowie auf die feinen Ölpartikel. Letztere werden durch die Zentrifugalkräfte radial nach außen bewegt, sie lagern sich mit anderen Ölpartikeln zusammen, sodass sich als Resultat feine Tröpfchen bilden, die aus dem Rotor abgeleitet werden können.

Bei Fluggasturbinen erfolgt die Belastung der durchströmenden Luft durch Öl insbesondere an Lagerbereichen, bei welchen die Strömung Lageröl absaugt. Die Separation des Öls ist nicht nur aus Umweltschutz-Gründen wünschenswert, sondern auch um das separierte Öl dem Schmierkreislauf wieder zuführen zu können.

Als nachteilig hat es sich erwiesen, dass die bekannten Ölseparatoren sehr kleine Ölpartikel nicht aus der Luft entfernen können. Die ausstrebende Luft ist somit weiterhin mit einem Öldunst oder Ölnebel belastet, der als am Triebwerk austretender, sichtbarer Ölnebel von Passagieren und Flughafenpersonal wahrgenommen werden und zu Irritationen führen kann.

Der Erfindung liegt die Aufgabe zu Grunde, einen Ölseparator der eingangs genannten Art zu schaffen, welcher bei einfachem Aufbau und einfacher, betriebssicherer Anwendbarkeit auch feinste Ölpartikel aus der durchströmenden Luft separiert.

Erfindungsgemäß wird die Aufgabe durch die Merkmale des Hauptanspruchs gelöst, die Unteransprüche zeigen weitere vorteilhafte Ausgestaltungen der Erfindung.

Erfindungsgemäß ist somit vorgesehen, dass in der Durchströmungskammer als poröses Material zumindest eine Einheit angeordnet ist, welche äußere Lagen aus einem porösen Metall und eine zwischengelagerte, ein Fasermaterial, beispielsweise Glasfasern umfassende Lage umfasst.

Der erfindungsgemäße Ölseparator zeichnet sich durch eine Reihe erheblicher Vorteile aus.

Durch die Möglichkeit, Öl belastete Luft durch eine Fasermaterial umfassende Lage durchzuleiten, können auch feinste Ölpartikel entfernt werden, die in den relativ großen Poren des porösen Metalls nicht ausreichend abgetrennt werden. Die Säuberung der Luft ist somit wesentlich intensiver.

Aus Gründen der Formbeständigkeit der Fasermaterialien scheidet es aus, die Durchströmungskammer direkt und ausschließlich mit Fasermaterial oder einem Fasermaterialgeflecht oder -gewebe zu füllen. Durch die auftretenden Zentrifugalkräfte würde das Fasermaterialgeflecht sehr schnell seine Form verlieren und sich im radial äußeren Bereich der Durchströmungskammer anlagern. Eine entsprechende Reinigung der durchströmenden Luft wäre somit nicht mehr möglich.

Durch die erfindungsgemäß vorgesehene Lösung, welche darin besteht, die die Fasermaterial umfassende Lage mit einer äußeren Lage porösen Metalls zu umgeben und somit einzuschließen, ist eine hervorragende Formbeständigkeit gewährleistet. Das poröse Metall kann die auftretenden Kräfte aufnehmen, sodass die Belastung des Fasermaterials selbst sehr niedrig ist. Hierdurch ist es möglich, diese in einer formstabilen Anordnung in der Durchströmungskammer zu halten.

Erfindungsgemäß ergibt sich somit eine schichtartige, laminatartige Anordnung des porösen Materials.

In einer möglichen Ausgestaltung der Erfindung ist vorgesehen, dass die die Fasermaterial umfassende Lage an ihren axialen Seiten sowie an ihrer radial äußeren Seite von dem porösen Metall umschlossen ist.

Zur Steigerung der Formbeständigkeit der die Fasermaterial umfassenden Lage kann es vorteilhaft sein, diese in einem gitterartigen Zwischengehäuse einzuschließen. Dieses kann in Form eines Drahtnetzes oder ähnlichem ausgebildet sein.

Bei einer etwas dickeren Lage aus Fasermaterial kann es vorteilhaft sein, diese zusätzlich abzustützen. Erfindungsgemäß kann dies durch zumindest ein axiales Abstandselement erfolgen, welches ein Zusammendrücken der die Fasermaterial umfassenden Lage verhindert.

Weiterhin kann es vorteilhaft sein, zumindest ein radiales Stützelement vorzusehen, um ein Verrutschen oder Verschieben der die Fasermaterial umfassenden Lage durch Einwirken der Zentrifugalkräfte zu verhindern. Besonders vorteilhaft ist es dabei, wenn das Stützelement in Form eines gazeartigen Geflechts ausgebildet ist.

Bei der Durchströmung des Ölseparators durch die mit Ölpartikeln oder Öldunst belastete Luft bewirkt das Fasermaterial eine Koaleszenz der Ölpartikel und die Ausbildung einer makroskopischen flüssigen Phase. Diese wiederum kann dann bei Weiterströmung der Luft durch das poröse Metall gefangen und abgeleitet werden. Es ergibt sich somit eine besonders feine Filtration oder Separation, durch welche Öldunst oder Ölnebel mit einem hohen Wirkungsgrad abgeführt werden kann.

Im Folgenden wird die Erfindung anhand eines Ausführungsbeispiels in Verbindung mit der Zeichnung beschrieben. Dabei zeigt:
- Fig. 1: eine vereinfachte Schnittansicht eines ZentrifugalÖlseparators,
- Fig. 2: eine Teil-Schnittansicht der erfindungsgemäßen Durchströmungskammer mit dem erfindungsgemäßen porösen Material,
- Fig. 3: eine vereinfachte Seiten-Schnittansicht eines weiteren Ausführungsbeispiels des erfindungsgemäßen Ölseparators, und
- Fig. 4: eine mittige Schnittansicht des in Fig. 3 gezeigten Ausführungsbeispiels.

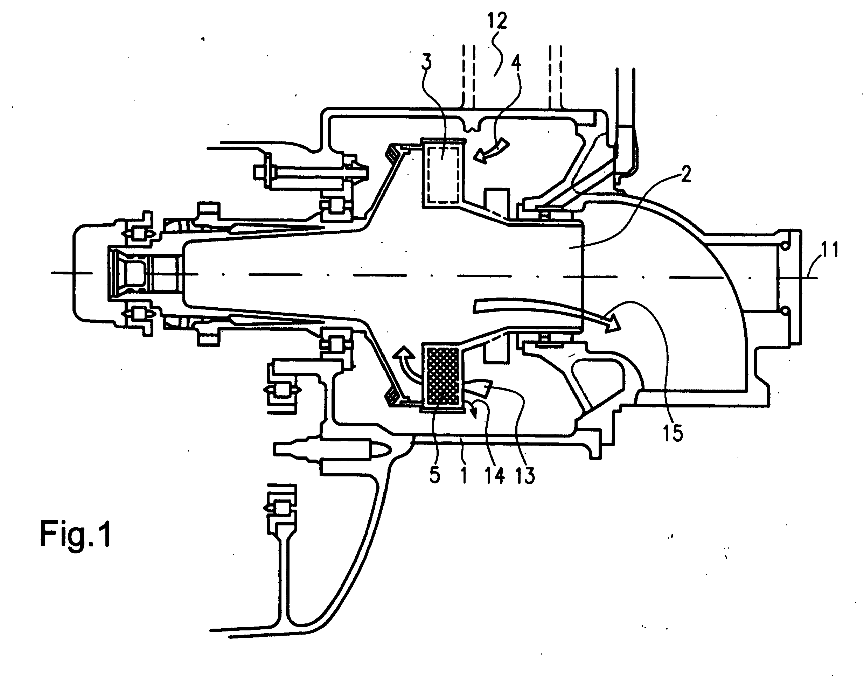

Die Fig. 1 zeigt in stark vereinfachter Darstellung ein Gehäuse 1, in welchem ein Rotor 2 drehbar gelagert ist. Die Drehung erfolgt um eine Drehachse 11.

Ölbelastete Luft 4 wird durch einen Einlass 12 zugeführt.

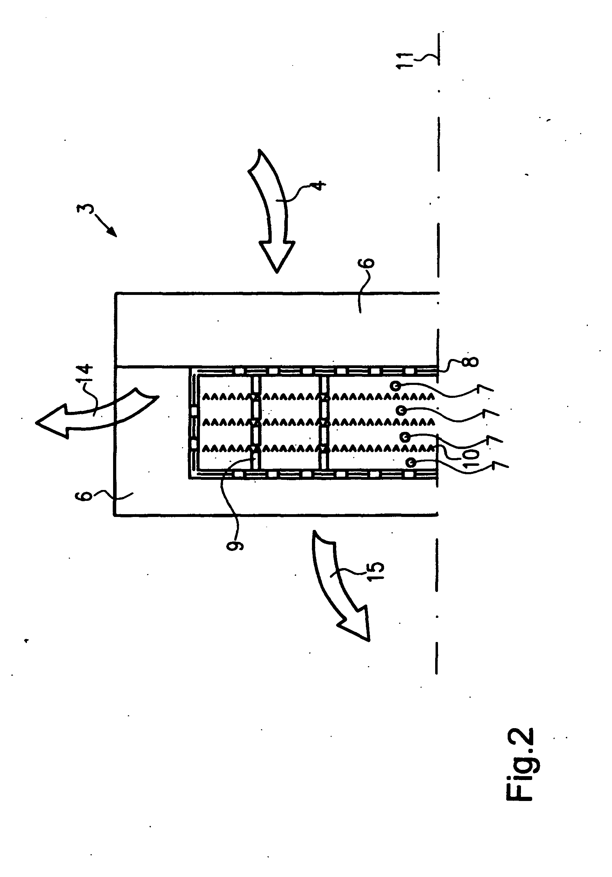

Der Rotor 2 weist eine ringförmige Durchströmungskammer 3 auf, in welcher poröses Material 5 angeordnet ist. Das poröse Material 5 wird nachfolgend in Zusammenhang mit Fig. 2 im Detail beschrieben.

Wie durch den Pfeil 13 dargestellt, strömt die Luft durch die Durchströmungskammer 3 und wird dabei von den Ölpartikeln separiert. Diese strömen, wie durch den Pfeil 14 dargestellt, als Ölstrom aus dem Rotor. Die Luft verlässt nachfolgend, wie durch den Pfeil 15 dargestellt, den Rotor 2 und wird aus dem Gehäuse 1 abgeführt.

Die Fig. 2 zeigt in stark vereinfachter Darstellung den Aufbau des erfindungsgemäßen porösen Materials in der Durchströmungskammer 3. Das poröse Material 5 umfasst axial äußere Lagen eines porösen Metalls, beispielsweise Retimet. Wie die Fig. 2 zeigt, ist auch eine radial außen liegende Lage des porösen Metalls 6 vorgesehen. Das poröse Metall 6 bildet einen Zwischenraum, in welchem ein gitterartiges, mit Poren oder Öffnungen versehenes Zwischengehäuse 8 angeordnet ist. In diesem Zwischengehäuse 8 sind mehrere Lagen 7 angeordnet, die aus Fasermaterial bestehen bzw. Fasermaterial umfassen. Die Fasermaterialien können als Gaze, Gewebe oder Geflecht ausgestaltet sein.

Um die Lagen 7 aus Fasermaterial zu stützen und zu halten, sind mehrere axiale Abstandselemente 9 sowie gitterartige Stützelemente 10 vorgesehen.

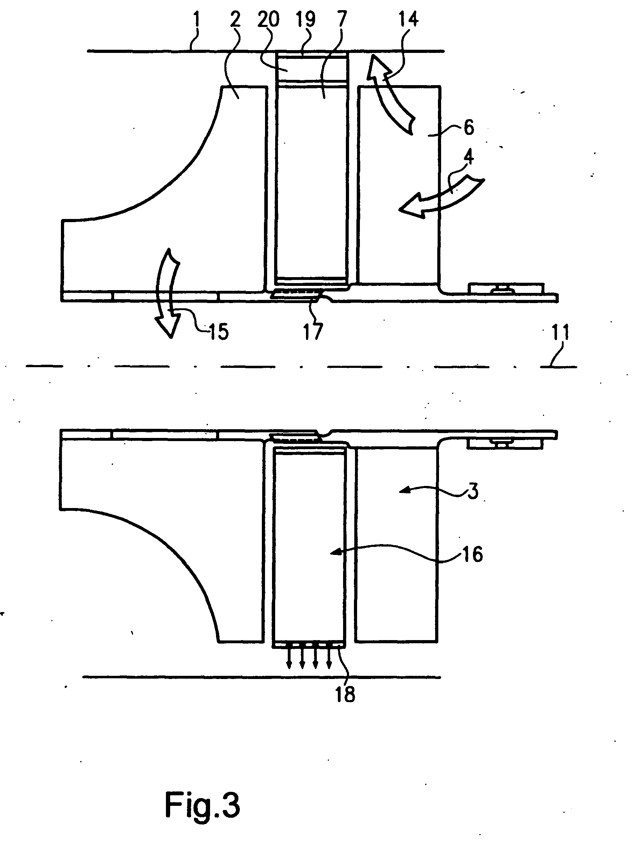

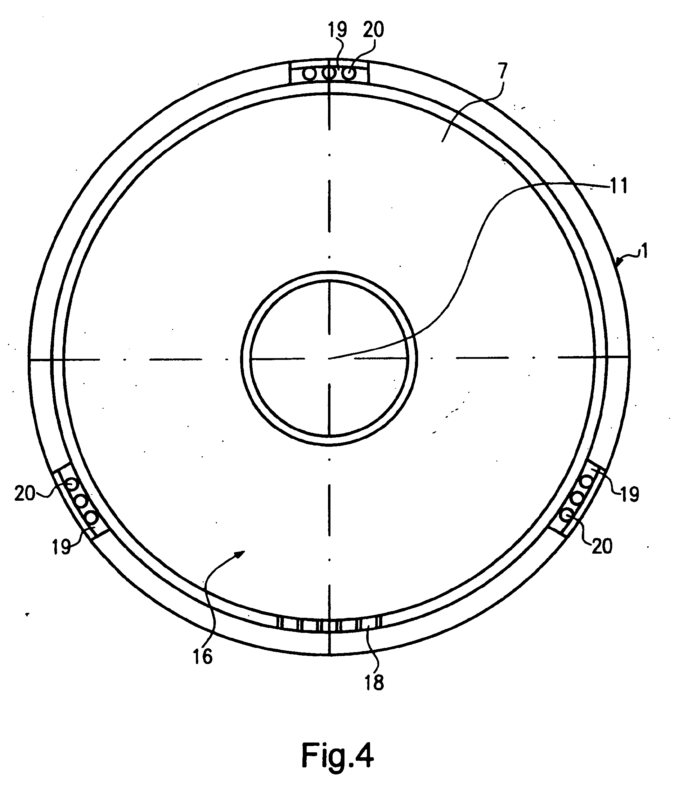

Bei dem in den Fig. 3 und 4 gezeigten Ausführungsbeispiel sind gleiche Teile jeweils mit gleichen Bezugsziffern versehen wie bei dem Ausführungsbeispiel der Fig. 1 und 2.

Wie bei dem vorangegangenen Ausführungsbeispiel dreht sich der Rotor 2 um die Drehachse 11. Er umfasst eine Durchströmungskammer 3, welche mit porösem Metall 6 gefüllt ist. Der Durchströmungskammer 3 ist eine zweite Durchströmungskammer 16 nachgeordnet, welche mit dem als Stator wirkenden Gehäuse 1 verbunden ist. In der zweiten Durchströmungskammer 16 ist zumindest eine Fasermaterial umfassende Lage 7 angeordnet, welche analog zu dem Ausführungsbeispiel der Fig. 1 und 2 aufgebaut sein kann, insbesondere hinsichtlich der Abstandselemente und der Stützelemente.

Wie durch die Pfeile 14 dargestellt, ergibt sich eine Ölströmung 14, welche zum Abtransport der abgeschiedenen Ölpartikel beiträgt. Die Strömung der ölbelasteten Luft ist mit dem Pfeil 4 gekennzeichnet, während die gereinigte Luftströmung als Pfeil 15 dargestellt ist.

Die Teile des Rotors 2 können mittels einer Kerbverzahnung 17 verbunden sein.

Wie aus der Darstellung der Fig. 3 und 4 ersichtlich ist, ist die zweite Durchströmungskammer 16 mittels dreier Streben 19 mit dem Gehäuse verbunden, in denen jeweils mehrere Löcher 20 ausgebildet sind, um die Luftströmung nicht zu behindern. Am Bodenbereich sind mehrere Löcher 18 vorgesehen, um die Ölabfuhr zu verbessern.

### Bezugszeichenliste

- 1: Gehäuse
- 2: Rotor
- 3: Durchströmungskammer
- 4: ölbelastete Luft
- 5: poröses Material
- 6: poröses Metall
- 7: Fasermaterial-Lage
- 8: Zwischengehäuse
- 9: Abstandselement
- 10: Stützelement
- 11: Drehachse
- 12: Einlass
- 13: Luftströmung
- 14: Ölstrom
- 15: Luftströmung
- 16: zweite Durchströmungskammer
- 17: Kerbverzahnung
- 18: Loch
- 19: Strebe
- 20: Loch

## Patentansprüche

1. Ölseparator mit einem Gehäuse (1) und einem in diesem drehbar angeordneten Rotor (2), welcher eine Durchströmungskammer (3) aufweist, welche von mit Öl belasteter Luft (4) durchströmbar ist, wobei in der Durchströmungskammer (3) poröses Material angeordnet ist, **dadurch gekennzeichnet, dass** in der Durchströmungskammer (3) als poröses Material zumindest eine Einheit angeordnet ist, welche äußere Lagen aus einem porösen Metall (6) und eine zwischengelagerte, Fasermaterial umfassende Lage (7) umfasst.

2. Ölseparator nach Anspruch 1, **dadurch gekennzeichnet, dass** die Fasermaterial umfassende Lage (7) an ihren axialen Seiten sowie an ihrer radial äußeren Seite von dem porösen Metall (6) umschlossen ist.

3. Ölseparator nach Anspruch 1 oder 2, **dadurch gekennzeichnet, dass** die Fasermaterial umfassende Lage (7) in einem gitterartigen Zwischengehäuse (8) eingeschlossen ist.

4. Ölseparator nach einem der Ansprüche 1 bis 3, **dadurch gekennzeichnet, dass** die Fasermaterial umfassende Lage (7) zumindest ein axiales Abstandselement (9) umfasst.

5. Ölseparator nach einem der Ansprüche 1 bis 4, **dadurch gekennzeichnet, dass** die Fasermaterial umfassende Lage (7) zumindest ein radiales Stützelement (10) umfasst.

6. Ölseparator nach einem der Ansprüche 1 bis 5, **dadurch gekennzeichnet, dass** das Stützelement (10) in Form eines gazeartigen Geflechts ausgebildet ist.

## Claims

1. Oil separator with a casing (1) and with a rotor (2), said rotor being arranged rotatably within said casing and having a flow chamber (3) which can be flown by oil-loaded air (4), with porous material being arranged in the flow chamber (3), **characterized in that** at least one unit of porous material is arranged in the flow chamber (3) which comprises outer layers of a porous metal (6) and an interlaid layer (7) of fibre material.

2. Oil separator in accordance with Claim 1, **characterized in that** the layer (7) comprising fibre material is enclosed by the porous metal (6) at its axial sides and at its radially outer side.

3. Oil separator in accordance with Claim 1 or 2, **characterized in that** the layer (7) comprising fibre material is enclosed in a grid-type intermediate casing (8).

4. Oil separator in accordance with one of the Claims 1 to 3, **characterized in that** the layer (7) comprising fibre material features at least one axial spacing element (9).

5. Oil separator in accordance with one of the Claims 1 to 4, **characterized in that** the layer (7) comprising fibre material features at least one radial supporting element (10).

6. Oil separator in accordance with one of the Claims 1 to 5, **characterized in that** the supporting element (10) is provided in the form of a gaze-type meshwork.

## Revendications

1. Séparateur d'huile avec un carter (1) et un rotor (2) placé dans celui-ci de manière à pouvoir tourner, qui présente une chambre d'écoulement (3) pouvant être traversée par de l'air chargé d'huile (4) et dans laquelle (3) est disposée une matière poreuse, **caractérisé en ce que** dans la chambre d'écoulement (3) est placée au moins une unité faisant office de matière poreuse et comprenant des couches extérieures faites d'un métal poreux (6) ainsi qu'une couche intercalaire comprenant de la matière fibreuse (7).

2. Séparateur d'huile selon la revendication n° 1, **caractérisé en ce que** la couche comprenant de la matière fibreuse (7) est entourée par le métal poreux (6) sur ses faces axiales ainsi que sur sa face extérieure radiale.

3. Séparateur d'huile selon la revendication n° 1 ou 2, **caractérisé en ce que** la couche comprenant de la matière fibreuse (7) est enfermée dans une enveloppe intermédiaire (8) réticulée.

4. Séparateur d'huile selon une des revendications n° 1 à 3, **caractérisé en ce que** la couche comprenant de la matière fibreuse (7) comprend au moins un élément entretoise (9) axial.

5. Séparateur d'huile selon une des revendications n° 1 à 4, **caractérisé en ce que** la couche comprenant de la matière fibreuse (7) comprend au moins un élément de soutien (10) radial.

6. Séparateur d'huile selon une des revendications n° 1 à 5, **caractérisé en ce que** l'élément de soutien (10) a la forme d'un treillis similaire à de la gaze.
